(19) Europäisches Patentamt
European Patent Office
Office européen des brevets

(11) **EP 2 138 633 B1**

(12) **EUROPEAN PATENT SPECIFICATION**

(45) Date of publication and mention
of the grant of the patent:
**30.05.2012 Bulletin 2012/22**

(51) Int Cl.:
*D21H 13/24* *(2006.01)* *H01M 2/16* *(2006.01)*
*D01F 6/62* *(2006.01)* *D01F 8/14* *(2006.01)*
*D04H 1/42* *(2012.01)* *D04H 1/52* *(2006.01)*
*D04H 1/54* *(2012.01)*

(21) Application number: **08740614.6**

(22) Date of filing: **11.04.2008**

(86) International application number:
**PCT/JP2008/057558**

(87) International publication number:
**WO 2008/130020 (30.10.2008 Gazette 2008/44)**

(54) **THIN PAPER**

DÜNNES PAPIER

PAPIER MINCE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **18.04.2007 JP 2007109277**

(43) Date of publication of application:
**30.12.2009 Bulletin 2009/53**

(73) Proprietor: **Teijin Fibers Limited
Osaka-shi, Osaka 541-0054 (JP)**

(72) Inventor: **INAGAKI, Kenji
Ibaraki-shi
Osaka 567-0006 (JP)**

(74) Representative: **HOFFMANN EITLE
Patent- und Rechtsanwälte
Arabellastraße 4
81925 München (DE)**

(56) References cited:
| | |
|---|---|
| EP-A1- 1 743 975 | EP-A1- 1 757 406 |
| EP-A1- 2 138 634 | WO-A1-2004/038073 |
| WO-A1-2005/040495 | WO-A1-2005/080679 |
| WO-A1-2005/095686 | WO-A1-2007/037512 |
| JP-A- 2005 270 965 | JP-A- 2005 299 069 |
| JP-A- 2007 107 160 | US-A1- 2001 029 138 |
| US-A1- 2003 118 814 | US-A1- 2004 197 554 |

**Description**

TECHNICAL FIELD

The present invention relates to a tissue having a uniform texture, which is especially favorable for thermal stencil printing papers or cell separators or capacitor papers.

BACKGROUND WART

Heretofore, as tissues for thermal stencil printing papers, proposed are those composed of natural fibers of Manila hemp or the like (e.g. , see Patent Reference 1) ; those composed of acrylic fibers uneven in point of the thickness and the length (e.g., see Patent Reference 2); those composed of natural fibers and polyester fibers and processed with resin (e.g., see Patent Reference 3) ; those composed of polyethylene terephthalate fibers and polyethylene naphthalate unstretched fibers (e.g., see Patent Reference 4), etc.

However, the tissue comprising natural fibers is problematic in that the fineness distribution is large, and therefore, when it is used as a thermal stencil printing plate, mottles may often form in the voids of the tissue and the printing stability is insufficient. The tissue comprising acrylic fibers that are uneven in point of the thickness and the length also has the same problem. The resin-processed tissue is problematic in that the ink permeability through it is unstable and uniform printing with it is impossible. The tissue comprising polyethylene naphthalate fibers as binder fibers is problematic in that the heat treatment condition planning in the tissue production is difficult.

Recently, studies and developments are made actively for fibers having a small fineness (e.g., see Patent Reference 5, Patent Reference 6, Patent Reference 7). In particular, short fibers are employed in wet type nonwoven fabrics (Patent Reference 8) and nanofibers are used for the production of nanofiber synthetic papers having an uniform pore size (Patent Reference 9) as well as for the production of abrasive cloth (Patent Reference 10).

[Patent Reference 1] JP-A 2001-315456
[Patent Reference 2] JP-A 11-301134
[Patent Reference 3] JP-A 9-39429
[Patent Reference 4] JP-A 2000-118162
[Patent Reference 5] JP-A 2004-162244
[Patent Reference 6] WO2005/09568
[Patent Reference 7] WO2005/080679
[Patent Reference 8] EP 2 138 634 A1
[Patent Reference 9] EP 1 743 975 A1
[Patent Reference 10] EP 1 757 406 A1

DISCLOSURE OF THE INVENTION

An object of the invention is to provide a tissue having a uniform texture, which is especially favorable for thermal stencil printing papers or cell separators or capacitor papers. The object can be attained by the tissue of the invention.

The tissue of the invention is a tissue having a basis weight of from 5 to 30 g/m$^2$, characterized by containing short fibers A that comprise a fiber-forming thermoplastic polymer and have a fiber diameter D of from 550 to 800 nm with a ratio L/D, fiber length L to the fiber diameter D, falling within a range of from 500 to 2500, and binder fibers B having a single fiber fineness of at least 0.1 dtex, in a ratio by weight of short fibers A/binder fibers B of from 90/10 to 60/40.

Preferably, the short fibers A are prepared by cutting conjugate fibers having an island component that comprises a fiber-forming thermoplastic polymer and has an island diameter D of from 100 to 1000 nm, and a sea component that comprises a polymer more soluble in an alkali aqueous solution than the fiber-forming thermoplastic polymer, and then processing the conjugate fibers with alkali for weight reduction to dissolve and remove the sea component. Also preferably, in the conjugate fibers, the sea component comprises a polyethylene terephthalate copolymerized with from 6 to 12 % by mol of 5-sodium-sulfonic acid and from 3 to 10 % by weight of polyethylene glycol having a molecular weight of from 4000 to 12000. Preferably, in the conjugate fibers, the island component comprises a polyester. Preferably, in the conjugate fibers, the number of islands is at least 100. Preferably, in the conjugate fibers, the composition ratio by weight of the sea component to the island component (sea/island) is within a range of from 20/80 to 80/20. Preferably, the binder fibers B are unstretched polyester fibers prepared by spinning a polyester polymer at a spinning speed of from 800 to 1200 m/min. Preferably, the binder fibers B are core/sheath conjugate fibers in which the core is formed of a polyethylene terephthalate and the sheath is formed of a copolyester.

In the surface of the tissue of the invention, preferably, the ratio of the maximum pore diameter Ma to the mean pore diameter Av, Ma/Av is at most 2. Preferably, the vapor permeability of the tissue is at most 16 cc/cm$^2$/sec. Preferably, the tissue is for thermal stencil printing papers or cell separators or capacitor papers.

BRIEF DESCRIPTION OF THE DRAWINGS

Fig. 1 is an electromicroscopic photograph of the surface of the tissue obtained in Example 1.
Fig. 2 is an electromicroscopic photograph of the surface of the tissue obtained in Comparative Example 4.

BEST MODE FOR CARRYING OUT THE INVENTION

In the invention, it is important that the short fibers A comprise a fiber-forming thermoplastic polymer and are cut to have a fiber diameter D (single fiber diameter) of from 550 to 800 nm with a ratio L/D, fiber length L (nm) to the fiber diameter D (nm), falling within a range of from 500 to 2500 (preferably from 500 to 1500). When the fiber diameter D is more than 1000 nm, then it is unfavorable since the pore size of the pores appearing in the surface of the tissue may be uneven (that is, the ratio of the maximum pore size to the mean pore size is large). On the contrary, when the fiber diameter D is less than 100 nm, then it is also unfavorable since the fibers may drop off through the net in papermaking. When the ratio (L/D) is less than 2500, it is unfavorable since the fibers may be entangled and their dispersion may be poor in papermaking, and as a result, a tissue having a uniform texture may be difficult to obtain. On the contrary, when the ratio L/D is less than 500, then it is also unfavorable since fiber-to-fiber connection may be extremely weak and the transference from the wire part to the blanket in the process of papermaking may be difficult and the process stability may lower.

The fiber diameter D may be determined by taking a picture of the cross section of a fiber with a 30000-power transmitting electronic microscope TEM and measuring it. When the TEM has a length-measuring function, then the diameter may be measured taking advantage of the length-measuring function. When a TEM not having a length-measuring function is used, the taken picture is copied in an enlarged mode, and it may be measured taking the enlarged scale into consideration.

In case where the cross-section profile of the single fiber is a modified cross-section except a round cross-section, the fiber diameter D is the diameter of the circumscribed circle of the cross section of the single fiber. The fiber diameter within a range of from 100 to 1000 nm corresponds to from 0.0001 to 0.01 dtex in terms of the fineness of the fiber.

The production method for the short fibers A as above is not specifically defined, for which preferred is the method disclosed in WO2005/095686. Briefly, in view of the fiber diameter and the uniformity thereof, the production method preferably comprises cutting conjugate fibers having an island component that comprises a fiber-forming thermoplastic polymer and has an island diameter D of from 550 to 800 nm, and a sea component that comprises a polymer more soluble in an alkali aqueous solution than the fiber-forming thermoplastic polymer (hereinafter this may be referred to as "easily-soluble polymer"), and then processing them with alkali for weight reduction to dissolve and remove the sea component. The island diameter may be determined by taking a picture of the cross section of the single fiber of the conjugated fiber with a transmitting electronic microscope and measuring it. In case where the island profile is a modified cross-section except a round cross-section, the island diameter D is the diameter of the circumscribed circle of the island.

Preferably, the dissolution speed ratio of the alkali aqueous solution-easily soluble polymer to form the sea component, to the fiber-forming thermoplastic polymer to form the island component is at least 200 (more preferably from 300 to 3000), as the island separability is good. When the dissolution speed is less than 200 times, then, while the sea component in the center part of the fiber cross section is dissolved, the separated island component in the surface part of the fiber cross section may be dissolved as the fiber diameter is small, and as a result, though the sea-corresponding part is reduced, the sea component in the center part of the fiber cross section could not be completely dissolved and removed, therefore resulting in thickness unevenness of the island component and solvent corrosion of the island component itself, and after all, short fibers having a uniform fiber diameter could not be obtained.

Preferred examples of the easily-soluble polymer to form the sea component are polyesters, aliphatic polyamides, polyolefins such as polyethylene and polystyrene, which have especially good fiber formability. Further concrete examples are polylactic acid, ultra-high molecular weight polyalkylene oxide-condensed polymers, and copolyesters of polyalkylene glycol compound and 5-sodium-sulfoisophthalic acid, and these are favorable as easily soluble in alkali aqueous solution. The alkali aqueous solution means an aqueous solution of potassium hydroxide, sodium hydroxide or the like. Apart from the above, other examples of the combination of a sea component and a solution to dissolve the sea component are formic acid for aliphatic polyamide such as nylon 6 and nylon 66; trichloroethylene for polystyrene; hydrocarbon solvent such as hot toluene or xylene for polyethylene (especially high-pressure method low-density polyethylene and linear low-density polyethylene) ; and hot water for polyvinyl alcohol or ethylene-modified vinyl alcohol-based polymer.

Of the polyester polymer, preferred is a polyethylene terephthalate-base copolyester prepared by copolymerization of from 6 to 12 % by mol of 5-sodium-sulfoisophthalic acid and from 3 to 10 % by weight of polyethylene glycol having a molecular weight of from 4000 to 12000, and having an intrinsic viscosity of from 0.4 to 0.6. In this, 5-sodium-sulfoisophthalic acid contributes toward increasing the hydrophilicity and the melt viscosity, and polyethylene glycol (PEG) enhances the hydrophilicity. PEG having a larger molecular weight may have a hydrophilicity-enhancing effect that may be caused by its high-order structure, but its reactivity is poor and it may form a blend phase, and therefore, it may cause some problems in point of the heat resistance and the spinning stability. When the copolymerization ratio is more than 10 % by weight, then it is unfavorable since the copolymer may have a melt viscosity-reducing effect.

On the other hand, preferred examples of the hardly-soluble polymer to form the island component are polyamides, polyesters, and polyolefins. Concretely, for the applications that require mechanical strength and heat resistance, preferred polyesters are polyethylene terephthalate (hereinafter this may be referred to as "PET"), polytrimethylene terephthalate, polybutylene terephthalate, polyethylene naphthalate, and copolymers comprising any of them as the main repetitive unit and copolymerized with any of aromatic dicarboxylic acid such as isophthalic acid or 5-sulfoisophthalic acid metal salt; aliphatic dicarboxylic acid such as adipic acid or sebacic acid; hydroxycarboxylic acid condensate such as ε-caprolactone; and glycol component such as diethylene glycol, trimethylene glycol, tetramethylene glycol or hexamethylene glycol. Preferred polyamides are aliphatic polyamides such as nylon 6 and nylon 66. On the other hand, polyolefins are characterized in that they are hardly corroded by acid and alkali, and they have a relatively low melting point and are usable as a binder component for separated ultra-fine fibers; and their preferred examples are high-density polyethylene, middle-density polyethylene, high-pressure-method low-density polyethylene, linear low-density polyethylene, isotactic polypropylene, ethylene-propylene copolymer, ethylene copolymer with vinyl monomer such as maleic anhydride, etc. Not limited to a round cross-section, the island component may have a modified cross-section. In particular, polyesters such as polyethylene terephthalate, polytrimethylene terephthalate, polybutylene terephthalate, polyethylene terephthalate/isophthalate having an isophthalic acid copolymerization ratio of at most 20 mol%, and polyethylene naphthalate; or aliphatic polyamides such as nylon 6 and nylon 66 have heat resistance and mechanical properties owing to their high melting point, and, as compared with ultra-fine fibrillated fibers from polyvinyl alcohol/polyacrylonitrile mixed spun fibers, they are favorable as applicable to cases that require heat resistance and strength.

The polymer to form the sea component and the polymer to form the island component may contain various additives, if desired, such as organic filler, antioxidant, heat stabilizer, light stabilizer, flame retardant, lubricant, antistatic agent, rust inhibitor, crosslinking agent, foaming agent, fluorescent agent, surface-smoothing agent, surface gloss improver, mold release improver such as fluororesin, etc., within a range not having any influence on the fiber spinnability and on the physical properties of the extracted ultra-fine fibers.

In the sea/island conjugate fibers, it is desirable that the melt viscosity of the sea component is higher than the melt viscosity of the island component in melt-spinning the fibers. In case where the two satisfy the requirement, the islands may hardly fuse together or a major part of the island components may hardly fuse to give those different from sea/island conjugate fibers, even though the composition ratio by weight of the sea component is less than 40 %.

Preferably, the melt viscosity ratio (sea/island) is within a range of from 1.1 to 2.0, more preferably from 1.3 to 1.5. When the ratio is less than 1.1 times, then the island components may fuse together during melt-spinning the fibers; but on the other hand, when more than 2.0 times, the spinning operability may be poor, since the viscosity difference is too large.

Next, the number of islands is preferably at least 100 (more preferably from 300 to 1000). Also preferably, the sea to island composition ratio by weight (sea/island) is within a range of from 20/80 to 80/20. Within the range, the thickness of the sea component between islands may be small, and it is desirable since the sea component removal is easy and the island component may be easily converted into ultra-fine fibers. In case where the proportion of the sea component is more than 80 %, the thickness of the sea component may be too large; but when it is less than 20 %, then the amount of the sea component may be too small and island-to-island fusing frequency may increase.

The spinneret to be used in melt spinning may be any one having hollow pins or micro holes for forming island components. For example, herein usable is a spinneret of such that the island components extruded via the hollow pins or micro holes thereof and the sea component of which the flow is so planned to fill the space between the island components are combined through it and compressed to form the sea/island cross-section of the spun fibers. Thus spun, the sea/island conjugate fibers are solidified with cooling air, and then taken up with a rotary roller or an ejector having a predetermined take-up speed, thereby giving unstretched fibers. Not specifically defined, the take-up speed is preferably from 200 to 5000 m/min. When it is lower than 200 m/min, then the producibility may be poor; but when higher than 5000 m/min, the spinning stability may be poor.

Thus obtained, the unstretched fibers may be directly led to a cutting step or may be to the subsequent extraction step depending on the use and the object of the ultra-fine fibers to be obtained after extraction of the sea component; or in order to make them have the intended strength, elongation and thermal shrinkage properties, they may be led to a cutting step or may be to the subsequent extraction step via a stretching step and a heat-treatment step. The stretching step may be a separate stretching process where the spinning and the stretching are attained in different steps, or a direct stretching process where the sinning is immediately followed by the stretching in one step.

Next, the conjugate fibers are cut in such a manner that the ratio of the fiber length L to the island diameter D, L/D could be within a range of from 500 to 2500. Regarding the cutting mode, it is desirable that the unstretched fibers or stretched fibers are cut with a guillotine cutter or a rotary cutter, either directly as they are, or after from tens to millions of such fibers are bundles into a tow.

The short fibers A having a fiber diameter of D are obtained by processing the above-mentioned, cut conjugate fibers with alkali for weight reduction. In the alkali processing for weight reduction, the ratio (bath ratio) of the fibers to the alkali liquid is preferably from 0.1 to 5 %, more preferably from 0.4 to 3 %. When the ratio is less than 0.1 %, the fibers may be much contacted with the alkali liquid, but the operability in the step of water drainage may be difficult. On the other hand, when it is more than 5 %, then the amount of the fibers is too much and the fibers may be entangled during the alkali processing for weight reduction. The bath ratio is defined according to the following formula:

```
Bath Ratio (%)

= (mass of fibers (gr)/mass of alkali aqueous solution (gr)

× 100).
```

Preferably, the time for the alkali processing for weight reduction is from 5 to 60 minutes, more preferably from 10 to 30 minutes. When the time is shorter than 5 minutes, then the weight reduction by alkali may be insufficient; but on the other hand, when it is longer than 60 minutes, then even the island component may be etched for weight reduction.

In the alkali processing for weight reduction, the alkali concentration is preferably from 2 % to 10 %. When it is less than 2 %, then weight reduction speed may be extremely slow owing to alkali shortage. On the other hand, when it is more than 10 %, then the weight reduction by alkali may be promoted too much and even the island component may be etched for weight reduction.

The mode of weight reduction by alkali includes a method comprising putting cut conjugate fibers into an alkali liquid, processing them therein under a predetermined condition for a predetermined period of time, then once treating them in a water removal step, again putting them in water for neutralization and dilution with an organic acid such as acetic acid or oxalic acid, and finally dewatering them; or a method comprising processing the fibers for a predetermined period of time, then neutralizing them, thereafter diluting them with water given thereto, and further dewatering them. The former method is a batch method, in which, therefore, a small amount of fibers may be produced (processed), but on the contrary, a long time is taken for the neutralization and therefore the producibility is bad in some degree. The latter method enables semi-continuous production, but requires a large amount of an acid-base aqueous solution for neutralization and a large amount of water for dilution. No limitation is given to the processing equipment, but from the viewpoint of preventing the fibers from dropping during water removal, it is desirable to use a mesh member (for example, non-alkali-hydrolyzable bag) having an opening ratio (area of opening part per unit area) of from 10 to 50 %, as in Japanese Patent No. 3678511. When the opening ratio is less than 10 %, then the water permeation through the member may be extremely poor; but when more than 50 %, the fibers may drop off.

After the alkali processing for water reduction, it is desirable that a dispersant (for example, Takamatsu Yushi's Model YM-81) is made to adhere to the surfaces of the fibers in an amount of from 0.1 to 5.0 % by weight of the fibers for the purpose of enhancing the dispersibility of the fibers.

Next, the binder fibers B for use in the tissue of the invention may be unstretched fibers (having a birefringence ($\Delta n$) of at most 0.05) or conjugate fibers having a single fiber fineness of at least 0.1 dtex (fiber diameter, 3 $\mu$m).

Of the binder fibers B of unstretched fibers or conjugate fibers, the single fiber fineness is preferably from 0.2 to 3.3 dtex (more preferably from 0.5 to 1.7 dtex). The fiber length of the binder fibers B is preferably from 1 to 20 mm (more preferably from 3 to 10 mm). When unstretched fibers are used as the binder fibers, the drying step after papermaking requires a thermal compression step to follow it, and therefore, it is desirable that, after papermaking, the tissue is processed for calendering/embossing treatment.

The unstretched fibers for the binder fibers B may be unstretched polyester fibers that have been spun at a spinning speed of preferably from 800 to 1200 m/min, more preferably from 900 to 1150 m/min. The polyester for the unstretched fibers includes polyethylene terephthalate, polytrimethylene terephthalate and polybutylene terephthalate; and preferred are polyethylene terephthalate and polytrimethylene terephthalate in view of their producibility and the dispersibility in water.

On the other hand, of the binder fibers B, the conjugate fibers are preferably core/sheath conjugate fibers in which the sheath part comprises a polymer component capable of fusing in heat treatment at 80 to 170°C after the papermaking process (for example, amorphous copolyester) and the core part comprises any other polymer of which the melting point is higher by at least 20°C than that of the polymer that forms the sheath part (for example, ordinary polyester such as polyethylene terephthalate, polytrimethylene terephthalate, polybutylene terephthalate). The binder fibers B may also be any known binder fibers such as core/sheath conjugate fibers, eccentric core/sheath conjugate fibers or side-by-side conjugate fibers in which the binder component (low-melting-point component) forms all or a part of the surface of the single fiber.

The above-mentioned amorphous copolyester may be obtained as a random or block copolymer of an acid component such as terephthalic acid, isophthalic acid, 2,6-naphthalenedicarboxylic acid, 5-sodium-sulfoisophthalic acid, adipic acid, sebacic acid, azelaic acid, dodecanoic acid, 1,4-cyclohexanedicarboxylic acid, and a diol component such as ethylene glycol, 1,3-propanediol, 1,4-butanediol, 1,5-pentanediol, 1,6-hexanediol, diethylene glycol, 1,4-cyclohexanediol, 1,4-cyclohexanedimethanol. Above all, it is desirable to use terephthalic acid, isophthalic acid, ethylene glycol and diethylene glycol as the main ingredient, in view of the cost. The copolyester of the type has a glass transition point within a range of from 50 to 100°C, and does not show a definite crystal melting point.

In the tissue of the invention, it is important that the short fibers A and the binder fibers B are in a ratio by weight (short fibers A/binder fibers B) of from 90/10 to 60/40 (preferably from 80/20 to 60/40). When the weight ratio of the short fibers A is smaller than the above range, then it is undesirable since the pore size of the pores appearing in the surface of the tissue may be uneven and since the tissue could not have a uniform texture. On the contrary, when the weight ratio of the short fibers A is larger than the above range, then it is also unfavorable since the amount of the adhesive component to form the binder force may be extremely small and the physical strength of the obtained sheet (tissue) may be insufficient therefore causing problems of fluffing and poor processability. Preferably, the tissue of the invention is composed of only the above-mentioned short fibers A and binder fibers B, but it may contain any other fibers than the above-mentioned short fibers A and binder fibers B, for example, various synthetic fibers (polyethylene terephthalate, polytrimethylene terephthalate, nylon, olefin-base fibers, aramid-base fibers), natural pulp such as wood pulp or linter pulp, and synthetic pulp consisting essentially of aramide or polyethylene, within a range of at most 30 % by weight of the overall weight of the tissue.

Regarding the production method for the tissue of the invention, preferred is a method comprising papermaking with an ordinary Fourdrinier paper machine, cylinder paper machine or short-circulation paper machine, or multi-layer papermaking with a plurality of those paper machines, followed by heat-treating the resulting sheet. In this process, the heat-treatment step that follows the papermaking step may be attained with any of a Yankee drier or an air-through drier. After the heat treatment, the tissue may be processed for calendering/embossing treatment with metal/metal rollers, metal/paper rollers, metal/elastic rollers, etc. In particular, when the tissue of the invention is processed for calendering treatment or embossing treatment, then the treatment is effective for enhancing the surface smoothness (thickness levelling) and for enhancing the strength owing to the formation of bonding points. In case where unstretched fibers are used as the binder fibers B, a thermal compression step is needed, for which the calendering treatment or the embossing treatment is necessary.

Thus obtained, the basis weight of the tissue is preferably within a range of from 5 to 30 $g/m^2$ (more preferably from 5 to 20 $g/m^2$). When the basis weight is less than 5 $g/m^2$, then it is unfavorable since the papermaking process may be unstable and the paper may be cut during its production and since the strength of the obtained nonwoven fabric may be poor. On the contrary, when the basis weight is more than 30 $g/m^2$, then it is also unfavorable since it is too large for thermal stencil printing papers and since the tissue obtained could not have desired properties.

As so mentioned hereinabove, the tissue of the invention is made by a wet papermaking process, using short fibers A and binder fibers B having a specific fiber diameter and a specific fiber length in a specific ratio by weight; and therefore, the pore size of the pores appearing in the surface of the tissue may be uniform and the tissue may have a uniform texture. Preferably, the ratio of the maximum pore size Ma to the mean pore size Av, Ma/Av, of the pores appearing in the surface of the tissue is at most 2. The pore size is determined as follows: A sample of 3 cm × 3 cm (square) is randomly cut out of a tissue, and using Seika Corporation's PMI Palm Porometer (based on ASTM E1294-89), the maximum pore size Ma and the mean pore size Av of the sample are measured. Preferably, the vapor permeability of the tissue is 16 $cc/cm^2/sec$ (more preferably from 0.1 to 10 $cc/cm^2/sec$).

The tissue of the invention has an extremely uniform texture, and is favorable for thermal stencil printing papers or cell separators or capacitor papers.

EXAMPLES

Examples and Comparative Examples of the invention are described in detail hereinunder, by which, however, the invention should not be limited.

(1) Melt Viscosity:

After dried, a polymer is set at an orifice, as set at an extruder melt temperature in spinning, and kept melted for 5 minutes, and then extruded out under a few levels of load applied thereto, whereupon the shear speed and the melt viscosity are plotted. The plots are connected gently to form a shear speed/melt viscosity curve, on which the melt viscosity at a shear speed of 1000 sec$^{-1}$ is read.

(2) Determination of Dissolution Speed:

Polymers for a sea component and an island component are separately spun out through a spinneret having 24 capillaries with a diameter of 0.3 mm and a length of 0.6 mm, and taken up at a spinning speed of from 1000 to 2000 m/min. Thus obtained, the unstretched fiber is stretched to have a residual elongation falling within a range of from 30 to 60 %, thereby preparing a multifilament of 83 dtex/24 filaments. This is processed in a bath of a predetermined solvent at a predetermined dissolution temperature at a bath ratio of 100, and from the dissolution time and the dissolution amount, the speed of weight reduction is determined.

(3) Fiber Diameter D:

Using a transmission electronic microscope TEM (with a length-measuring function), a picture of the cross section of a fiber is taken at a magnification of 30000 powers, and the fiber diameter D is measured. The fiber diameter D is the diameter of the circumscribed circle of the cross section of the single fiber (average of a number, n of samples, n = 5).

(4) Fiber Length L:

Using a scanning electronic microscope (SEM), an ultra-fine short fiber (short fiber A) before dissolution and removal of the sea component is kept laid on a stand, and the fiber length is measured at a magnification of from 20 to 500 powers (average of a number, n of samples, n = 5). Taking advantage of the length-measuring function of SEM, the fiber length L is measured.

(5) Tensile Strength (breaking length):

Based on JIS P8113 (test method for tensile strength of paper and board), the tensile strength (breaking length) is measured.

(6) Pore Size:

Using Seika Corporation's PMI Palm Porometer (based on ASTME1294-89), the maximum pore size Ma (μm) and the mean pore size Av (μm) are measured. Samples having a ratio of the maximum pore size Ma to the mean pore size Av, Ma/Av of at most 2 are good.

(7) Elongation:

Based on JIS P8132 (test method for elongation of paper and board), the elongation is measured.

(8) Basis Weight:

Based on JIS P8124 (method for measurement of meter basis weight of paper), the basis weight is measured.

(9) Thickness:

Based on JIS P8118 (test method for thickness and density of paper and board), the thickness is measured.

(10) Density:

Based on JIS P8118 (test method for thickness and density of paper and board), the density is measured.

(11) Melting Point:

Using DuPont's differential thermal analyzer Model 990, a sample is heated at a heating speed of 20°C/min, and its melting peak is determined. In case where the melting temperature could not be definitely shown, the polymer is analyzed with a trace melting point measuring device (by Yanagimoto Seisakusho), and the temperature at which the polymer begins to soften and flow (softening point) is read as the melting point thereof. A number, n of samples (n = 5) are analyzed, and the data are averaged.

(12) Texture:

The surface condition of the finished sample is visually checked for the texture, and evaluated as 4 ranks. The samples are grouped into 4th grade, 3rd grade, 2nd grade and 1st grade sequentially in that order of the samples having a better texture.

[Example 1]

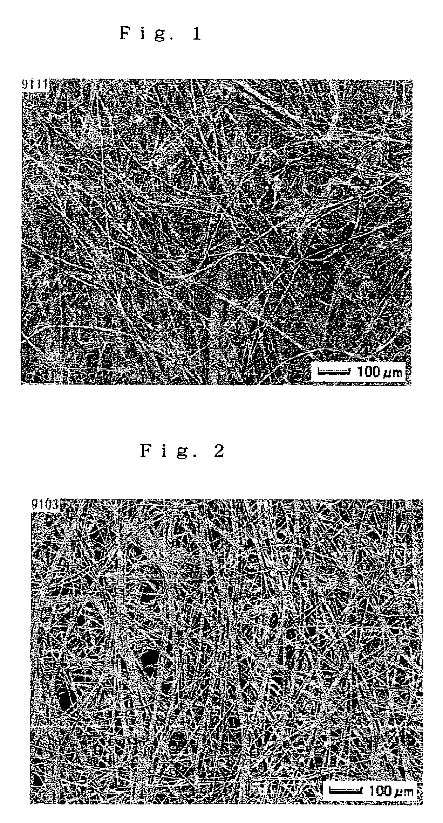

As an island component, used was polyethylene terephthalate having a melt viscosity at 285°C of 120 Pa·sec; and as a sea component, used was modified polyethylene terephthalate copolymerized with 4 % by weight of polyethylene glycol and 9 % by mol of 5-sodium-sulfoisophthalic acid and having a melt viscosity at 285°C of 135 Pa·sec and a mean molecular weight of 4000; and at a ratio by weight of sea/island = 10/90, these were spun through a spinneret having a number of islands of 400, and taken up at a spinning speed of 1500 m/min. The alkali weight reduction speed difference was 1000 times. This was stretched by 3.9 times, and then cut with a guillotine cutter into 1000-$\mu$m pieces, thereby preparing conjugate fibers for short fibers A. This was processed with aqueous 4 % NaOH solution at 75°C for 10 % weight reduction, and the formation of ultra-thin short fibers having a relatively uniform fiber diameter and fiber length was confirmed (fiber diameter 750 nm, fiber length 1 mm, aspect ratio (L/D) = 1333, round cross section). Apart from this, unstretched cut fibers of polyester (fineness 0.2 dtex (fiber diameter 4.5 $\mu$m), fiber length 3 mm, not crimped) were used as binder fibers B; and these were stirred in a mixer (short fiber A/binder fiber B = 60/40). Then, using a square paper machine, this was made into paper by hand, and dried with a rotary drier to obtain a sample sheet. Next, this was processed with a calendering machine (metal roller/metal roller, linear pressure 120 kg/cm, temperature 160°C, speed 2 m/min) to obtain a tissue. The physical properties of the tissue are shown in Table 1. An electromicroscopic picture of the surface of the tissue is shown in Fig. 1.
Next, using the tissue, a thermal stencil printing paper, a cell separator and a capacitor paper were fabricated, and these all had high quality as their texture was uniform.

[Example 2]

In place of the binder fibers B used in Example 1, core/sheath conjugate binder fibers (Teijin Fiber TBS, fineness 1.1 dtex (fiber diameter 10 $\mu$m), fiber length 5 mm, core/sheath = 50/50, core: polyethylene terephthalate, sheath: copolyester, not crimped) were used, and dried with a rotary drier, a tissue was obtained. Since this tissue formed firm bonding as dried with a rotary drier, this was not calendered. The physical properties of the obtained tissue are shown in Table 1.

[Example 3]

A tissue was obtained in the same manner as in Example 1, for which, however, the ratio of the fibers used was changed to (short fibers A/binder fibers B = 80/20). The physical properties of the obtained tissue are shown in Table 1.

[Example 4]

A tissue was obtained in the same manner as in Example 2, for which, however, the ratio of the fibers used was changed to (short fibers A/binder fibers B = 80/20). The physical properties of the obtained tissue are shown in Table 1.

[Comparative Example 1]

A tissue was obtained in the same manner as in Example 1, for which, however, the fiber length of the short fibers A was changed to 2 mm (aspect ratio (L/D) = 2667). Since the aspect ratio increased, the fiber dispersibility lowered and the sample was much mottled. The physical properties of the obtained tissue are shown in Table 1.

[Comparative Example 2]

A tissue was obtained in the same manner as in Example 1, for which, however, the fiber length of the short fibers A was changed to 0.3 mm (aspect ratio (L/D) =400). Since the aspect ratio decreased, the fiber dispersibility increased, but on the contrary, the wet paper strength decreased, the processability worsened and the shrinkage in drying increased, and as a result, the sample was much mottled. The physical properties of the obtained tissue are shown in Table 1.

[Comparative Example 3]

A tissue was obtained in the same manner as in Example 1, for which, however, the fiber constitution was changed to (short fibers A/binder fibers B = 25/75). Since the ratio of the short fibers A decreased, the number of the constitutive fibers decreased, and as a result, the tissue obtained had large pores. The physical properties of the obtained tissue are shown in Table 1.

[Comparative Example 4]

A tissue was obtained in the same manner as in Example 1, for which, however, polyethylene terephthalate fibers (fineness 0.1 dtex (fiber diameter 3 $\mu$m), fiber length 3 mm, aspect ratio (L/D) = 1000, not crimped) were used as the short fibers A. Since the fiber diameter increased, the tissue obtained had large pores. The physical properties of the obtained tissue are shown in Table 1. The electromicroscopic picture of the surface of the tissue is shown in Fig. 2.

[Table 1]

| | Tissue Constitution | | | | | | Physical Data | | | Strength, Elongation | | Vapor Permeability | Texture | Pore Size (μm) | | |
| | Short Fibers A | | | Other Fibers | Binder Fibers B | | | | | | | | | | | |
| | 750nm ×1mm | 750nm ×2mm | 750nm ×0.3mm | 0.1dtex × 3mm | Unstretched Fiber 0.2dtex ×3mm | Core/ Sheath Conjugate Fibers Weight 0.1dtex ×5mm | Basis Weight | Thikness | Density Length | Breaking Lenght | Elongation | | | Maximum Pore Size | Mean fore Size | Ma/Av |
| | L/D=1333 | L/D=2667 | L/D=400 | L/D=1000 | L/D=667 | L/D=500 | g/m² | mm | g/cm³ | km | % | cc/cm²/s | - | Ma | Av | |
| Example 1 | 60 | | | | 40 | | 10.5 | 0.02 | 0.53 | 2.6 | 5.4 | 1.9 | 4th grade | 8.5 | 4.6 | 1.85 |
| Example 2 | 60 | | | | | 40 | 10.3 | 0.15 | 0.07 | 1.4 | 8.6 | 15.4 | 4th grade | 9.5 | 5.6 | 1.70 |
| Example 3 | 80 | | | | 20 | | 11.6 | 0.02 | 0.58 | 1.8 | 3.5 | 0.6 | 4th grade | 5.5 | 3.5 | 1.57 |
| Example 4 | 80 | | | | | 20 | 13.2 | 0.13 | 0.10 | 1.1 | 6.5 | 8.6 | 4th grade | 6.2 | 4.2 | 1.48 |
| Comparative Example 1 | | 60 | | | 40 | | 9.5 | 0.02 | 0.48 | 1.7 | 5.6 | 7. 8 | 1st grade | 18-5 | 6.4 | 2.89 |
| Comparative Example 2 | | | 60 | | 40 | | 9.3 | 0.02 | 0.47 | 1.4 | 4.7 | 6.8 | 1st grade | 10.5 | 3.4 | 3.09 |
| Comparative Example 3 | 25 | | | | 7.5 | | 13.4 | 0.02 | 0.67 | 3.5 | 8.6 | 15.4 | 2nd grade | 65. 4 | 30.5 | 2.14 |
| Comparative Example 4 | | | | 60 | 40 | | 10.5 | 0.02 | 0.53 | 2.5 | 4.6 | 18.5 | 4th grade | 45.5 | 20.1 | 2.26 |

EP 2 138 633 B1

INDUSTRIAL APPLICABILITY

According to the invention, there is provided a tissue having a uniform texture, which is especially favorable for thermal stencil printing papers or cell separators or capacitor papers, and the industrial value of the invention is extremely great.

**Claims**

1. A tissue having a basis weight of from 5 to 30 g/m$^2$, **characterized by** containing short fibers A that comprise a fiber-forming thermoplastic polymer and have a fiber diameter D of from 550 to 800 nm with a ratio L/D, fiber length L to the fiber diameter D, falling within a range of from 500 to 2500, and binder fibers B having a single fiber fineness of at least 0.1 dtex, in a ratio by weight of short fibers A/binder fibers B of from 90/10 to 60/40.

2. The tissue as claimed in claim 1, wherein the binder fibers B are unstretched polyester fibers prepared by spinning a polyester polymer at a spinning speed of from 800 to 1200 m/min.

3. The tissue as claimed in claim 1, wherein the binder fibers B are core/sheath conjugate fibers in which the core is formed of a polyethylene terephthalate and the sheath is formed of a copolyester.

4. The tissue as claimed in claim 1, wherein, in the surface of the tissue, the ratio of the maximum pore diameter Ma to the mean pore diameter Av, Ma/Av is at most 2.

5. Use of the tissue as claimed in any of claims 1 to 4, for thermal stencil printing papers or cell separators or capacitor papers.

**Patentansprüche**

1. Tissue mit einem Basisgewicht von 5 bis 30 g/m$^2$, **dadurch gekennzeichnet, dass** es kurze Fasern A, die ein faserbildendes thermoplastisches Polymer umfassen und einen Faserdurchmesser D von 550 bis 800 nm haben, mit einem Verhältnis L/D, Faserlänge L zu Faserdurchmesser D, das in den Bereich von 500 bis 2.500 fällt, und Bindemittelfasern B mit einer einzelnen Faserfeinheit von mindestens 0,1 dtex, in einem Gewichtsverhältnis von kurzen Fasern A/Bindemittelfasern B von 90/10 bis 60/40 enthält.

2. Tissue gemäß Anspruch 1, worin die Bindemittelfasern B ungestreckte Polyesterfasern sind, die durch Spinnen eines Polyesterpolymers mit einer Spinngeschwindigkeit von 800 bis 1.200 m/min hergestellt werden.

3. Tissue gemäß Anspruch 1, worin die Bindemittelfasern B Kern-/Hülle-Verbundfasern sind, in denen der Kern aus einem Polyethylenterephthalat gebildet wird und die Hülle aus einem Copolyester gebildet wird.

4. Tissue gemäß Anspruch 1, worin in der Oberfläche des Tissues das Verhältnis des maximalen Porendurchmessers Ma zum minimalen Porendurchmesser Av, Ma/Av, höchstens 2 ist.

5. Verwendung des Tissues gemäß irgendeinem der Ansprüche 1 bis 4, für thermische Schablonendruckpapiere oder Zellenseparatoren oder Kondensatorpapier.

**Revendications**

1. Tissu ayant un grammage de 5 à 30 g/m$^2$, **caractérisé en ce qu'**il contient des fibres courtes A qui comprennent un polymère thermoplastique fibrogène et ont un diamètre de fibre D de 550 à 800 nm avec un rapport L/D, de la longueur de fibre L au diamètre de fibre D, tombant dans un domaine de 500 à 2500, et des fibres liantes B ayant une finesse de fibre unique d'au moins 0,1 dtex, en rapport en masse des fibres courtes A/fibres liantes B de 90/10 à 60/40.

2. Tissu selon la revendication 1, dans lequel les fibres liantes B sont des fibres de polyester non étirées préparées par filage d'un polymère polyester à une vitesse de filage de 800 à 1200 m/mn.

**3.** Tissu selon la revendication 1, dans lequel les fibres liantes B sont des fibres conjuguées de type âme/gaine dans lesquelles l'âme est formée d'un poly(téréphtalate d'éthylène) et la gaine est formée d'un copolyester.

**4.** Tissu selon la revendication 1, dans lequel, dans la surface du tissu, le rapport du diamètre maximal des pores Ma au diamètre moyen des pores Av, Ma/Av, est d'au moins 2.

**5.** Utilisation du tissu selon l'une quelconque des revendications 1 à 4 pour des papiers d'impression au stencil thermique ou des séparateurs de cellules ou des papiers pour condensateurs.

Fig. 1

Fig. 2

**EP 2 138 633 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001315456 A
- JP 11301134 A
- JP 9039429 A
- JP 2000118162 A
- JP 2004162244 A
- WO 200509568 A
- WO 2005080679 A
- EP 2138634 A1
- EP 1743975 A1
- EP 1757406 A1
- WO 2005095686 A
- JP 3678511 B